# EUROPEAN PATENT APPLICATION

(11) **EP 4 119 763 A1**
(43) Date of publication of application: **18.01.2023**
(21) Application number: 22175180.3
(22) Date of filing: 01.10.2014
(51) Int. Cl.: E06B 9/24, F21V 23/04, F21V 33/00, G02F 1/163, H05B 47/11, F21S 19/00

(54) **CONTROL SYSTEM FOR COLOR RENDERING OF OPTICAL GLAZINGS**

(30) Priority: 01.10.2013 US 201314043214
(62) Divisional of application: 14784178.7
(71) Applicant: Sage Electrochromics, Inc., Faribault, MN 55021 (US)
(72) Inventor: GREER, Bryan D., Northfield, 55057 (US); PODBELSKI, Louis J., Eagan, 55123 (US); SANDERS, Helen, Faribault, 55021 (US)
(74) Representative: Zimmermann & Partner Patentanwälte mbB

(57) **Abstract**

The present disclosure provides for a method of controlling a plurality of independently controllable sections of one or more electrochromic devices (262, 263, 264, 265) belonging to a common interior space to provide lighting having a substantially color neutral or aesthetically pleasing spectrum to the interior space. The method comprises receiving a desired illuminance input indicating an amount of lighting desired in the interior space, and a neutral lighting input indicating a quantifiable amount of the sections of the electrochromic devices to be set to a high transmittance state. One or more sections of the electrochromic devices are selected in accordance with the neutral lighting input. The selected sections of the electrochromic device are set to the high transmittance state. The one or more electrochromic devices collectively transmit an amount of light into the interior space in accordance with the desired illuminance input.

## Description

### CROSS REFERENCE TO RELATED APPLICATIONS

The present application is a continuation of U.S. Application Serial No. 14/043, 214, filed October 1, 2013, the disclosure of which is hereby incorporated herein by reference.

### BACKGROUND OF THE INVENTION

Electronically tintable glass, such as electrochromic devices, have been developed as an alternative to passive coating materials for light and heat management in building and vehicle windows. In contrast to passive coating materials, electronically tintable glazings employ materials capable of reversibly altering their optical properties in response to an applied potential.

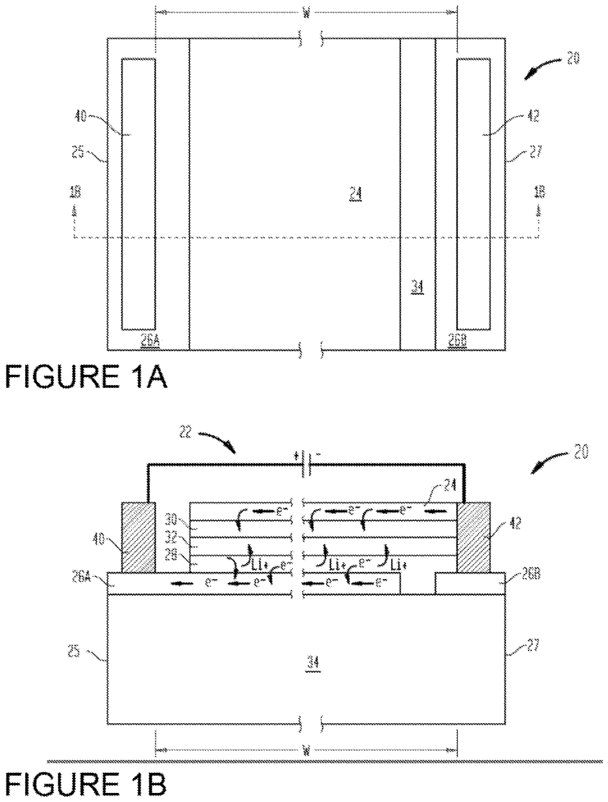

In general, electronically tintable devices or glazings have a composite structure through which the transmittance of light can be modulated. FIGS. 1A and 1B illustrate plan and cross-sectional views, respectively, of a typical prior art electrochromic device 20. The device 20 includes isolated transparent conductive layer regions 26A and 26B that have been formed on a substrate 34, such as glass or optical glazing. In addition, the device 20 includes a counter electrode layer 28, an ion conductive layer 32, an electrochromic layer 30 and a transparent conductive layer 24, which have been deposited in sequence over the conductive layer regions 26. It is to be understood that the relative positions of the electrochromic and counter electrode layers of the device 20 may be interchanged. Further, the device 20 includes a bus bar 40 which is in contact only with the conductive layer region 26A, and a bus bar 42 which may be formed on the conductive layer region 26B and is in contact with the conductive layer 24. The conductive layer region 26A is physically isolated from the conductive layer region 26B and the bus bar 42, and the conductive layer 24 is physically isolated from the bus bar 40. Although an electrochromic device may have a variety of shapes, such as including curved sides, the illustrative, exemplary device 20 is a rectangular device with the bus bars 40 and 42 extending parallel to each other, adjacent to respective opposing sides 25, 27 of the device 20, and separated from each other by a distance w. Further, the bus bars 40 and 42 are connected by wires to positive and negative terminals, respectively, of a low voltage electrical source 22 (the wires and the source 22 together constituting an "external circuit").

Referring to FIGS. 1A and 1B, when the source 22 is operated to apply an electrical potential across the bus bars 40 and 42, electrons, and thus a current, flows from the bus bar 42, across the transparent conductive layer 24 and into the electrochromic layer 30. In addition, if the ion conductive layer 32 is an imperfect electronic insulator as is the case in many thin film electrochromic devices, a small current, commonly referred to as a leakage current, flows from the bus bar 42, through the conductive layer 24 and the electrochromic layer 30, and into the ion conductive layer 32. Further, ions flow from the counter electrode layer 28, through the ion conductive layer 32, and to the electrochromic layer 30, and a charge balance is maintained by electrons being extracted from the counter electrode layer 28, and then being inserted into the electrochromic layer 30 via the external circuit. As the current flows away from the bus bar 42 across the conductive layer 24 and towards the bus bar 40, voltage is dropped by virtue of the finite sheet resistance of the conductive layer 24, which is typically about 3-20 Ohms/square. In addition, current flowing across the conductive layer 24 is incrementally reduced, as current is drawn through the combination of the layers 30, 32 and 28 ("stack") to produce the electrochromic coloration in the device 20.

Applying the electrical potential across the busbars 40,42 may be beneficial for preventing excess light or glare from being transmitted through the optical glazing. However, when the device 20 darkens, light (e.g., daylight) transmitted through the device is filtered according to the spectral properties of the device. As a result, the light transmitted through the glazing also often takes on a blue hue.

In some situations, a user of the device, or a vehicle or building equipped with the device, may find the blue-tinted lighting to be unpleasant. Such a user could prefer that the lighting be more "neutral" (e.g., having an appearance under natural or ambient light conditions, having an appearance that comports with conventional indoor or outdoor lighting, etc.). Thus, there is a need for a device that prevents excess light or glare from being transmitted through the optical glazing while maintaining the lighting of the interior space at an acceptable or pleasing color, and in some instances at a neutral color.

### BRIEF SUMMARY OF THE INVENTION

Some embodiments of the present invention provide a method of controlling a plurality of independently controllable sections of one or more electronically tintable devices belonging to a common interior space such that the overall illumination color spectrum of the light transmitted by the one or more electronically tintable devices has a substantially color neutral or aesthetically pleasing spectrum. The method may include receiving a desired illuminance input indicating an amount of lighting desired in the interior space and a neutral lighting input indicating a quantifiable amount of the one or more electronically tintable devices to be set at a high transmittance state. More generally, the method may include receiving a different input associated with one of a desired heating or lighting condition of the interior space. The method may further include selecting a subset (e.g., one or more sections) of the sections of the electronically tintable devices in accordance with the neutral lighting input. The method may further include controlling the selected sections such that the selected sections are set to a first state for admitting light having a substantially color neutral or aesthetically pleasing spectrum into the interior space, and such that the remaining sections collectively transmit an amount of light into the interior space in accordance with the desired illuminance input, or more generally the other input.

In some examples, the quantifiable amount may be one of a percentage of the total surface area of the electronically tintable devices, such as a percentage between about 5% and about 25% of the total surface area of the electronically tintable devices. In other examples, the quantifiable amount may be a discrete number of sections. In some examples, the quantifiable may be a function of the overall effectiveness of light mixing in the interior space.

In some examples, the first state may be a high transmittance state such that the illumination color spectrum of light transmitted through a section set to the high transmittance state has a substantially color neutral or aesthetically pleasing spectrum, such as a visible light transmittance of at least about 32%.

Selecting one or more sections may further involve receiving priority information indicating a high-transmittance priority value for each of the sections and selecting the section or sections having the greatest high-transmittance priority value. The priority value of a given section may be based on the impact that the transmitting light at the first state through that given section has on the overall daylighting, overall temperature, overall glare, or overall illumination color spectrum of the light admitted into the interior space (e.g., transmitted by the one or more electronically tintable devices). For instance, a section closer to the ceiling of the interior space may have a greater priority value than a section closer to the floor of the interior space. For further example, a section having a glare condition may have a lower priority value than a section not having a glare condition. Setting a section of the device having a glare condition to the high transmittance state may result in glare being transmitted through that section and into the interior space. Also, in some examples, the priority value of at least one section may be received from a user input.

Selecting one or more sections may further involve updating priority values for each of the unselected sections. Selecting the section or sections having the greatest priority value may be repeated until the amount of selected sections matches the neutral lighting input.

The method may further include comparing the selected amount of the one or more electronically tintable devices to the neutral lighting input. If the selected amount of the one or more electronically tintable devices exceeds the neutral lighting input, one of the selected sections of the one or more electronically tintable devices may be deselected. For example, the most recently selected section or sections may be deselected. Alternatively, the selected section or sections having the lowest priority value may be deselected.

Setting the selected sections to the first state may further involve either (a) setting the selected sections to the high transmittance state such that the light admitted through said sections has a substantially color neutral or aesthetically pleasing spectrum, or (b) illuminating one or more artificial light sources associated with the selected sections. An artificial light source may include one or more light emitting diodes. The method may further involve receiving a glare condition input indicating whether a given section has a glare condition such that setting that section to the high transmittance state will result in glare being transmitted to the interior space, and controlling the one or more electronically tintable devices such that none of the sections having a glare condition are set to the high transmittance state. Such selecting may be done such that none of the sections having a glare condition are selected.

The method may further include setting the selected sections not having a glare condition to the high transmittance state such that the light admitted through those sections has a substantially color neutral or aesthetically pleasing spectrum, and illuminating an artificial light source associated with the selected sections having the glare condition. On the one hand, if the amount (e.g., percentage of surface area, etc.) of the electronically tintable devices not having a glare condition is less than the neutral lighting input, an artificial light source associated with the selected sections may be illuminated. On the other hand, if the amount of the electronically tintable devices not having a glare condition equals or exceeds the neutral lighting input, the selected sections may be set to the high transmittance state.

In some examples, each independently controllable section may be one of a panel of one of the electronically tintable devices. In other examples, each section may be a preset zone of panels of the one or more electronically tintable devices. In yet further examples, each section may be a portion of a single panel of one of the electronically tintable devices (i.e., a subpanel).

Aspects of the disclosure also provide for the method to include receiving a desired illuminance input indicating an amount of lighting desired in the interior space, and an actual illuminance input indicating a measured illuminance of the interior space. Such methods further include comparing the desired illuminance input with the actual illuminance input. If the desired illuminance input and the actual illuminance input do not sufficiently match, the method may further include determining which of the actual illuminance input and desired illuminance input may be greater, and controlling the one or more electronically tintable devices accordingly. Controlling may involve, if the actual illuminance input is greater, selecting a section or sections of the one or more electronically tintable devices and setting that section to a low transmittance state. Controlling may involve, if the desired illuminance input is greater, selecting a section of the one or more electronically tintable devices and setting those sections to transmit light having a substantially color neutral or aesthetically pleasing spectrum into the interior space. The controlling may be done such that the overall illumination color spectrum of the light transmitted by the devices has a substantially color neutral or aesthetically pleasing spectrum.

Setting the section or sections to transmit light having a substantially color neutral or aesthetically pleasing spectrum into the interior space may involve one of (a) setting those sections to a high transmittance state such that the light admitted through that section has a substantially color neutral or aesthetically pleasing spectrum, and/or (b) illuminating an artificial light source associated with the selected sections. The selecting may further involve receiving priority information indicating one of a high-transmittance priority value and a low-transmittance priority value for each of the sections. If the desired illuminance input may be greater, one or more sections having the greatest high-transmittance priority values may be selected. If the actual illuminance input may be greater, one or more sections having the greatest low-transmittance priority values may be selected. In some examples, the priority value of a given section may be based on the impact that transmitting light having a substantially color neutral or aesthetically pleasing spectrum through said section has on the overall illumination color spectrum of the light transmitted by the devices. For instance, a section closer to the ceiling of the interior space may have a greater high-transmittance priority value than a section closer to the floor of the interior space, and that section closer to the floor may have a greater low-transmittance priority value than the section closer to the ceiling. For further example, a section having a glare condition may have a higher low-transmittance priority value and a lower high-transmittance priority value than a section not having a glare condition.

Selecting one or more sections may further involve updating priority values to each of the unselected sections. Selecting the one or more sections having the greatest priority values may be repeated until the amount of selected sections matches the neutral lighting input. The comparing, determining and controlling may be repeatedly performed until the actual illuminance input and the desired illuminance input sufficiently match.

The method may further include, for each given section of the electronically tintable devices, receiving a glare condition input indicating whether that section has a glare condition such that setting said section to the high transmittance state will result in glare being transmitted to the interior space, and controlling the electronically tintable devices such that none of the sections having a glare condition are set to the high transmittance state. Selecting the one or more electronically tintable devices may be done such that if the desired illuminance input is greater, none of the sections having a glare condition may be selected.

Aspects of the disclosure also provide for a control device for independently varying the transmittance of one or more portions of at least one electronically tintable device. The control device may include a power source electrically coupled to each of the portions of the at least one electronically tintable device. The power source may be configured to supply power to each of the portions independently. The control device may also include a processor. The processor may be electrically coupled to the power source, and configured to control an amount of current or voltage supplied to each of the portions of the electronically tintable device such that a first portion of the electronically tintable device may be set at a first state for blocking at least one of daylight, solar heat, and solar glare, while a second portion of the electronically tintable device may be set at a second state for transmitting light having a substantially color neutral or aesthetically pleasing spectrum. The overall spectrum of light transmitted through the electronically tintable device may have a substantially color neutral or aesthetically pleasing spectrum. In some examples, the processor may be further configured to receive a desired illuminance input indicating an amount of lighting desired in an interior space associated with the at least one electronically tintable device, and to control an amount of current or voltage supplied the first portion of the electronically tintable device based at least in part on the desired illuminance input. In some examples, the processor may be further configured to receive a solar heat input indicating whether it may be desired to heat or cool an interior space associated with the at least one electronically tintable device, and to control an amount of current or voltage supplied to the second portion of the at least one electronically tintable device based at least in part on the solar heat input.

In some examples, the processor may be further configured to receive a respective priority value for each of the portions of the at least one electronically tintable device. The priority value may indicate the impact that transmitting light having a substantially color neutral or aesthetically pleasing spectrum through that respective portion has on the illumination color spectrum of the light transmitted collectively through the at least one electronically tintable device. The processor may be further configured to select one of the first portion and the second portion of the at least one electronically tintable device based at least in part on the priority value of that selected portion.

Yet another aspect of the disclosure provides for a system for controlling an amount and color of light admitted to an interior space. The system may include one or more electronically tintable devices comprising a plurality of sections. The transmissivity of each section may be independently controllable. The system may also include a power source coupled to each of the sections. The power source may be configured to independently supply power to each of the sections. The system may further include a processor electrically coupled to the power source. The processor may be configured to control an amount of current or voltage supplied to each of the sections such that a first section of the electronically tintable device is operated at a first state for blocking at least one of daylight, solar heat, and solar glare, while a second section is operated at a second state for providing to the interior space light having a substantially color neutral or aesthetically pleasing spectrum. Control of the sections may result in the overall spectrum of light provided by the electronically tintable device having a substantially color neutral or aesthetically pleasing spectrum.

In some examples, the system may further include an artificial light source coupled to the power source. The processor may be further configured to control illumination of the artificial light source such that the overall spectrum of light provided tothe interior space may have a substantially a color neutral spectrum. The artificial light source may be on a façade of the interior space. At least one of the electronically tintable devices may be also on the façade of the interior space. The façade of the interior space may be one of a building façade and a vehicle frame.

In some examples, the artificial light source may be a standard light emitting diode. In other examples, the artificial light source may be a laminate between panes of a window on the façade. In yet other examples, the artificial light source may be one or more light emitting diodes mounted around the perimeter of a window on the façade.

Yet a further aspect of the disclosure provides for a method for controlling an electronically tintable device having multiple independently controllable sections. The method may include receiving each of an occupancy input, an illuminance input and a solar heat input. The occupancy input may indicate whether a space associated with the electronically tintable device is vacant or occupied. The illuminance input, may indicate whether there is an excess of daylight in the space. The solar heat input may indicate whether it is desired to warm or cool the space.

The method may further involve determining, based at least in part on the occupancy input, whether the space is vacant or occupied. If the space is vacant, the method may include determining, based at least in part on the solar heat input, whether it is desired to warm or cool the space. If it is desired to warm the space, the method may also include setting the electronically tintable device to a first transmission state having a high transmissivity and high solar heat gain coefficient. Alternatively, if it is desired to cool the space, the method may instead include setting the electronically tintable device to a transmission state having a low transmissivity.

If the space is occupied, the method may include determining, based at least in part on the illuminance input, whether there is an excess of daylight in the space. If there is an excess of daylight in the space, the method may include determining, based at least in part on the solar heat input, whether it is desired to warm or cool the space. If it is desired to warm the space, the method may include setting a first subset of the sections of the electronically tintable device to a transmission state having a high transmissivity and high solar heat gain coefficient, and second subset of the sections to a transmission state having a low transmissivity. Alternatively, if it is desired to cool the space, the method may instead include setting a first subset of the sections of the electronically tintable device to a transmission state having a high transmissivity and low solar heat gain coefficient, and second subset of the sections to a transmission state having a low transmissivity.

If there is not an excess of daylight in the space, the method may include determining, based at least in part on the solar heat input, whether it is desired to warm or cool the space. If it is desired to warm the space, the method may include setting a first subset of the sections of the electronically tintable device to a transmission state having a high transmissivity and high solar heat gain coefficient, and second subset of the sections to a transmission state having a partial transmissivity. Alternatively, if it is desired to cool the space, the method may instead include setting a first subset of the sections of the electronically tintable device to a transmission state having a high transmissivity and low solar heat gain coefficient, and second subset of the sections to a transmission state having a partial transmissivity.

The method may further include receiving a color rendering input. The color rendering input may indicate whether it is desired to admit color neutral light into the space. If it is determined, based at least in part on the color rendering input, that it is desired to admit color neutral light into the space, the method may include maintaining the transmission state of the first subset of sections at a high transmissivity. Alternatively, if it is not desired to admit color neutral light into the space, the method may instead include overriding the transmission state of the first subset of sections such that the transmission state matches that of the second subset of sections.

### BRIEF DESCRIPTION OF THE DRAWINGS

FIGURE 1A is a top plan view of an electrochromic device.
FIGURE 1B is a view of the electrochromic device of FIGURE 1A at cross-sectional line 1B.
FIGURE 2 is a functional block diagram of a system in accordance with an aspect of the disclosure.
FIGURE 3 is a perspective drawing of a device in accordance with an aspect of the disclosure.
FIGURE 4 is another perspective drawing of a device in accordance with an aspect of the disclosure.
FIGURE 5 is a flow diagram of an operation in accordance with an aspect of the disclosure.
FIGURE 6 is a flow diagram of another operation in accordance with an aspect of the disclosure.
FIGURE 7 is a flow diagram of yet another operation in accordance with an aspect of the disclosure.
FIGURE 8 is a flow diagram of yet another operation in accordance with an aspect of the disclosure.
FIGURE 9 is a flow diagram of yet another operation in accordance with an aspect of the disclosure.
FIGURE 10 is a table in accordance with an aspect of the disclosure.

### DETAILED DESCRIPTION

One object of the present invention is to provide a system for controlling an electrochromic or other variably transmissive device to maintain an acceptable illumination color spectrum in an interior space associated with the device. It has been found that in most situations maintaining between about 5% and about 25% of the surface area of the device in a high transmittance state (e.g., about 32% transmissivity or above, about 40% transmissivity or above, about 50% transmissivity or above, about 55% transmissivity or above, about 60% transmissivity or above, the highest transmittance state that the device is capable of achieving, within about 10% transmittance of the highest transmittance state, etc.) provides enough color neutral light to maintain an acceptable illumination color spectrum, even while the remaining about 75% to about 95% of the device is in a low transmittance setting (e.g., about 60% transmissivity or below, about 55% transmissivity or below, about 50% transmissivity or below, about 40% transmissivity or below, about 32% transmissivity or below, fully tinted, etc.). The acceptable illumination color spectrum may be a substantially color neutral or aesthetically pleasing spectrum (e.g., having a color neutral appearance to an observer or occupant of the room) or an aesthetically pleasing spectrum (e.g., having an aesthetically pleasing appearance to an observer, such as a greyish or greenish appearance instead of a blueish or yellowish appearance, etc.). Thus, the system generally maintains at least about 5% to about 25% of the surface area of the device in a high transmittance state, while the transmissivity of the remaining surface area of the device may be controlled (e.g., fully bleached to the highest available transmittance setting, partially bleached, fully tinted to the lowest available transmittance setting, partially tinted) to achieve acceptable daylighting in the interior space and/or power efficiency in the system. For purposes of this disclosure, the term "bleach" is meant to generally refer to any manner in which the surface area of the device is controlled tο admit light (i.e., visible light). Conversely, the term "tint" is meant to generally refer to any manner in which the surface area of the device is controlled to block any of light, heat, or solar glare. The system independently controls the transmissivity level of respective portions of the device.

The system also receives various "inputs" to determine which portions of the device to tint and which portions to bleach. Throughout the disclosure, the term inputs is intended to include both data (e.g., set points, configurations, etc.) that is preprogrammed into to the system (e.g., during manufacture, during installation, upon startup of the system, etc.) as well as data that is subsequently entered into the system at a later time (e.g., a user input during operation, an input from a linked energy management system, etc.). For purposes of clarity, all such data will be referred to as "inputs."

Another object of the present invention is to provide a method for controlling the device such that an acceptable illumination color spectrum is maintained in an interior space associated with the device.

Yet another object of the present invention is to provide a control unit that is configured, through a processor of the control unit having memory and instructions, to maintain an acceptable illumination color spectrum in an interior space associated with the device.

Aspects, features and advantages of the disclosure will be appreciated when considered with reference to the following description of embodiments and accompanying figures. The same reference numbers in different drawings may identify the same or similar elements. Furthermore, the following description is not limiting; the scope of the present disclosure is defined by the appended claims and equivalents.

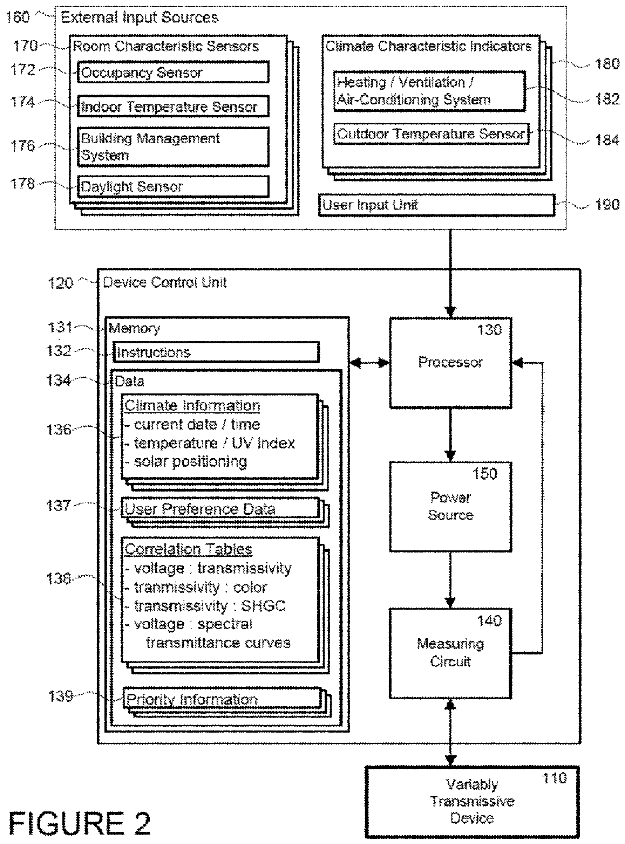

FIG. 2 is a functional block diagram of a system 100 in accordance with aspects of the disclosure. The system 100 may include an electrochromic or otherwise electrically variably transmissive device 110, a device control unit 120, and one or more external input sources 160.

The system 100 of FIG. 2 may be applied to any space associated with the device 110. The space associated with the device may be an interior space, such as a room in a house, an office in a building, or a vehicle (e.g., car, airplane) interior. The device 110 may separate such an interior space from an outdoor environment. Varying the transmissivity of the device 110 may control one or more aspects of the lighting of the interior space. Such aspects include, but are not limited to, the amount of sunlight that passes from the outdoor environment through to the interior space, glare passing from the outdoor environment through to the interior space, and the color of the light passing from the outdoor environment through to the interior space.

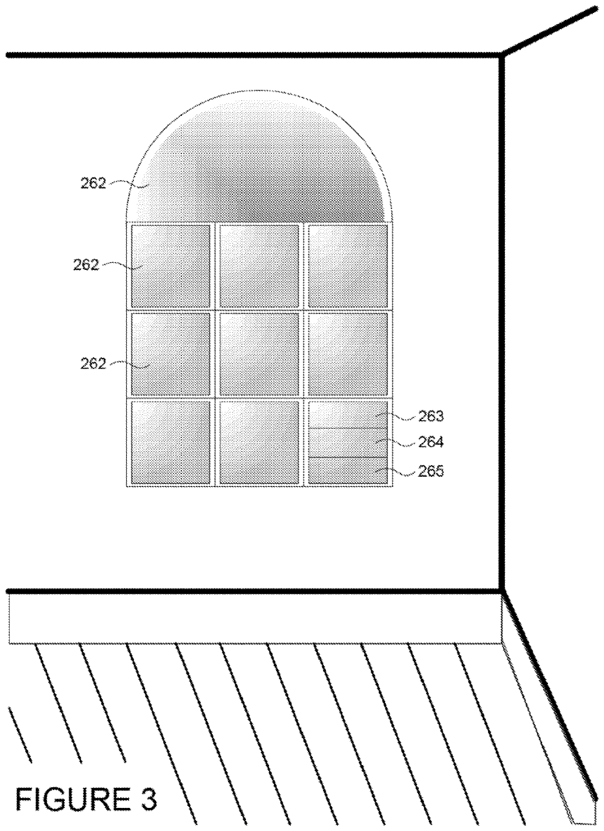

The device 110 may be any electronically tintable device having a variable transmissivity controlled by an electrical input, such as an electrochromic device, suspended particle device ("SPD"), and various photochromic devices. The device 110 may be installed in an insulated glass unit with a structure similar to that described in FIG. 1. Furthermore, the device 110 is not limited to a device having a single pane or panel but rather can be a device having one or more panels, each panel being independently controlled by the system 100. For example, in FIG. 3, which is a perspective view of the device 110, the device 110 includes several panels 262. For purposes of this disclosure, there is no practical limitation to the size of the panel. The panel can be any standard size, such as having an area between about 5 square feet and about 40 square feet. Alternatively, the panel may be even smaller than 5 square feet, provided that the panel may function as a variably transmissive device, such as an electrochromic device. Likewise, the panel may be larger than 40 square feet, provided that the panel still functions as a variably transmissive device.

The transmissivity of each panel may be independently controllable. Independent control of the panels enables the system 100 to darken one panel while maintaining another panel in a bleached state. In some examples, each panel 262 can include multiple subpanels 263-265, and each subpanel 263-265 may also be independently controllable. Independent control of the subpanels enables the system to darken one portion of a given panel while maintaining a different portion of the panel in a bleached state. The panels and subpanels may be grouped into zones, where each zone may be independently controllable.

Control of multi-zone electrochromic devices is described at greater detail in copending patent application Serial Nos. 13/407, 106 and 13/790,167, the disclosures of which are hereby incorporated herein in their entirety. Generally, the multi-zone EC devices of those disclosures fall into two categories: (1) those comprising two bus bars at the opposing sides or edges of an EC device and additional bus bars positioned in an interior spaced between the opposing side or edge bus bars; and (2) those where electrochromic zones are formed from a single electrochromic coating on a substrate, wherein the single electrochromic coating is cut to form individual electrochromic zones. In addition to those embodiments, the present disclosure also provides for logical zones of a plurality of electrochromic devices (e.g., the bottommost panel of each electrochromic device on a wall of the interior space, the uppermost panel of each electrochromic device on a wall of the interior space, a cluster of electrochromic devices in a quadrant or otherwise spatially defined region of the interior space, etc.)

Returning to FIG. 2, the device control unit 120 may include a processor 130, measuring device or sensor 140, and power source 150. The processor 130 may be any conventional processor, including but not limited to commercially available CPUs. Alternatively, the processor 130 may be a dedicated device such as an ASIC or other hardware-based processor. The memory 131 may store information accessible by processor 130, including instructions 132 that may be executed by the processor 130, and data 134.

The instructions 132 may be any set of instructions to be executed by the processor 130. For example, the instructions may be stored as computer code on the computer-readable medium. In that regard, the terms "instructions" and "programs" may be used interchangeably herein. Functions, methods, and routines of the instructions are explained in more detail below.

The data 134 may be retrieved, stored or modified by processor 130 in accordance with the instructions 132. The data may comprise any information sufficient to identify the relevant information, including, without limitation, numbers, descriptive text, proprietary codes or information that is used by a function to calculate the relevant data. The data may also be formatted in any computer-readable format.

The data 134 may include data or inputs that are consistently being obtained and updated. For example, the data 134 may include climate data 136. The climate data 136 may indicate an outdoor temperature, UV index, humidity, or other outdoor climate data. The climate data 136 may also indicate a current date, a current time of day, and/or a current solar position (e.g., mapping the position of the Sun given a certain date and time of day) . Storing information regarding the current time, date, and/or solar position may be useful for determining whether the interior space is receiving direct sunlight or excess solar glare. This information may be useful for controlling the appropriate daylighting in the interior space.

The data 134 may also include preprogrammed and regularly updatable data or inputs. For example, the data may include user preference data 137, indicating a user's preference for operation of the device control unit 120. In one example, described in greater detail below, the user preference data may include a zone input, indicating a zone (e.g., one or more panels or subpanels) of the device 110 that a user prefers to be darkened or bleached. In other examples, the user preference data may indicate other desired parameters of the device 110, including, without limitation, a desired transmissivity setting for the interior space, a desired transmissivity setting for any individual zone, panel or subpanel, a heating setting, or a cooling setting. Some of these parameters and settings will be described in greater detail below.

The data 134 may further include data or inputs that are preprogrammed and not regularly updatable. For example, the data may include correlation information indicating correlations between various measurable parameters of the electrochromic device, such as the amount of power delivered to a given panel of the device, the transmissivity level of that panel, and/or the luminance provided to the interior space by the light transmitted through that panel. In some examples, the information may further correlate the power or transmissivity to the illumination color spectrum of the light transmitted through the panel. Using this information, the system may determine the overall or average illumination color spectrum of the light transmitted into the interior space.

The correlation information may be stored in the memory as, for example, tables 138, and may be used by the processor to determine a particular characteristic of the device 110 or the interior space given a known measurement of another characteristic.

The data 134 may also comprise updatable priority information regarding the priority of bleaching or tinting each zone, panel, or subpanel of the device 110. Priority information could indicate that amount of natural light that a particular zone, panel or subpanel contributes to an interior space if left bleached (or partially bleached). Default priority information could be initially preprogrammed into the data 134 based on known characteristics of each zone, panel or subpanel. The default priorities may be selected based on each respective panel's efficacy in providing good overall daylighting or overall good mixing of neutral light with the blueish light transmitted through other tinted panels. As described in greater detail below, overall daylighting may be measured based on a combined (weighted or unweighted) average of luminance readings gathered from multiple optical sensors located inside or outside the interior space. Use of multiple sensors (e.g., averaged data, standard deviations, etc.) may also indicate that daylight is spread well throughout the interior space, for instance, at every or most ends or at every or most corners of the interior space. Overall light mixing may similarly be measured using multiple optical sensors capable of measuring a color spectrum of received light. Alternatively or in combination with the sensors, daylighting and/or light mixing may be estimated or approximated based on preprogrammed algorithms in the data.

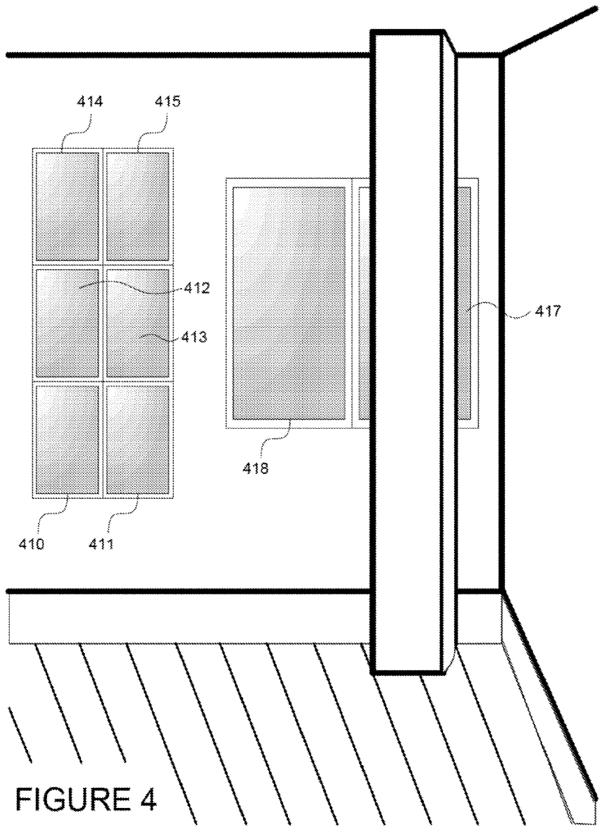

To illustrate how priority information could be assigned to one or more devices in an interior space, FIG. 4 illustrates an example interior space having several panels 410-418 with different default priorities. In the example of FIG. 4, the default priorities are selected based on each respective panel's efficacy in providing good mixing of neutral light with the blueish light transmitted through other tinted panels. Since the panels 410-411 close to the floor of the interior space could have less impact on overall daylight and/or overall neutral lighting in the space than would panels closer to the ceiling 414-415, panels 410 and 411 would be assigned a lower default priority. This means that the system would, with all other conditions equal, select to bleach panels 414-415 over selecting panels 410-411. Another panel 417 is blocked by a vertical structural column. The structural column may interfere with the light transmitted through panel 417, and bleaching panel 417 thus may not provide adequate daylighting or overall light mixing in the interior space. Therefore, panel 417 could be assigned a lower default priority than panel 418. Again, this means that the system would, with all other conditions equal, select to bleach panel 418 over selecting to bleach panel 417.

Default priority settings for the various panels in the interior space could be updated based on any of the inputs received by the system 100. For example, a default priority setting may be overridden by a user preference. The user preference may be either an input to bleach a specific panel, or an input to tint a specific panel. In one such example, a user may prefer that panels 410 and 411 be assigned the highest priority for bleaching. As such, the system's default priority for bleaching panels 414-415 over panels 410-11 would be overridden. In another example, the user may prefer that panel 418 be tinted. As such, the system's default priority for bleaching panel 418 over panel 417 will have been overridden by the user's preference not to bleach panel 418.

The default priority setting may also be overridden by a solar glare input. For example, the presence of solar glare at a particular panel, based on the solar glare input, could override the default priority of bleaching that panel, instead making it a priority to tint the panel and prevent solar glare in the interior space. The solar glare input may be any input indicative of direct sunlight or solar glare on a particular panel. Solar glare inputs may be provided by an astronomical clock or solar angle database (hereinafter a "clock"), indicating the date and time, and thereby conveying the Sun's current position. Solar glare inputs may also be registered by an optical sensor. The optical sensor may be able to determine the presence of excess glare even when the clock would not indicate the presence of direct sunlight. For instance, on a snowy day, the optical sensor could detect indirect glare reflected by snow or ice on the ground. The optical sensor could also detect the absence of glare despite the clock's indication that solar glare should be present, for instance on an overcast day. The clock and optical sensor may be used in combination or separately to register the solar glare input.

In some examples, the user preference input could take precedence over the solar glare input, and in other examples, the solar glare input could take precedence over the user preference input. Alternatively, each user preference input could itself include additional information as to whether it takes precedence over a conflicting solar glare input.

In some embodiments, a panel may be preset to overlook glare conditions. For example, if the panel is fitted with a diffusing inner lite, such as a pane of light diffusing glass (e.g., OKALUX^{™} glass produced by Schott) or laminate of translucent material, the panel may admit relatively little or no glare even when it receives direct sunlight. Similarly, if the interior space is built with a light shelf, the light shelf may admit relatively little or no glare into the interior space. Thus, the natural light introduced via the diffused inner lite or the light shelf could ensure good light mixing without introducing glare conditions.

One benefit of including the tables 138 in the data 134 is that the tables 138 enable the processor 130 to determine a desired operation state of the device 110 based on otherwise immeasurable information. For example, the system 100 may not include other instruments for gauging the overall or average color of light transmitted through the device 110 and into the interior space. However, by including a table 138 correlating a illumination color spectrum to either a voltage or transmissivity characteristic of the device 110, the device control unit 120 may effectively evaluate the overall or average color spectrum of the transmitted light.

The data 134 is not limited to the above described information, but may include any other information useful for controlling the device 110, or for indentifying a characteristic of the device 110, the interior space, or an energy management preference. For example, in copending U.S. Application Serial No. 13/650, 952, the disclosure of which is hereby incorporated herein in its entirety, the data may also include information relating to heat gain coefficients, such as a correlation table correlating a transmissivity level to a certain solar heat gain coefficient. The amount of solar heat transmitted by the device 110 could then be controlled based on such information.

Returning to FIG. 2, the sensor 140 may be capable of measuring electrical properties of the device 110. In one example, the sensor 140 may include a voltage measuring circuit for measuring a difference in electric potential between the first terminal and the second terminal of the device 110. In another example, the sensor 140 may include a current measuring circuit for measuring an amount of current flowing through the device 110, such as an amount of current at the first terminal or at the second terminal. In one example, the measuring circuit may monitor properties of the device 110, such as temperature of the device 110 and bleaching/coloring history, as described in United States Patent No. 7,133, 181 ("Control System for Electrochromic Devices"), the disclosure of which is hereby included herein in its entirety. In another example, the measuring circuit may be part of an identification circuit, as described in copending application 13/43b, 719, the disclosure of which is also hereby included herein in its entirety.

The sensor 140 may be coupled to the processor 130 in order to relay the detected voltage and/or current characteristics of the electrochromic device to the processor 130. These characteristics may in turn indicate to the processor 130 the then-present transmissivity of the device 110, based on the stored tables 138, as described above.

The power source 150 may be any variable voltage source known in the art, including, without limitation, a switching buck voltage converter or digital-to-analog (DAC) converter with a linear power amplifier. The power source 150 may be capable of controlling the operation of the device 110, or any of the zones, panels, or subpanels of the device 110. For example, the power source 150 may supply an amount of voltage or current to each zone, panel, or subpanel of the device 110 according to instructions received from the processor 130. Additionally, the power supply may vary the amount and/or polarity of the supplied voltage based on the instructions received from the processor.

The power source 150 may be coupled to the processor 130 in order receive instructions regarding operation of the device 110. For example, if the processor 130 determines to reduce the transmissivity of the device 110, the power source 150 may receive an instruction to increase the power supplied to the device 110. Alternatively, if the processor 130 determines to increase the transmissivity of the device 110, the power source 150 may receive an instruction to decrease the power supplied to the device 110.

The external input sources 160 may provide information to the processor 130 regarding proper control of the device 110. The external input sources 160 may include several room characteristic sensors 1/0, including but not limited to an occupancy sensor 172, a temperature sensor 174, a Building Management System (BMS) 176, and a daylight sensor 176. These sensors may provide the device control unit 120 with information necessary to determine a proper state of operation for the device. For example, the occupancy sensor 172 may provide information indicating whether the interior space is currently in use.

In some examples, it may be desirable to operate the electrochromic device differently depending on whether the room is in use or not. For further example, the indoor temperature sensor 174 may provide information indicating whether the room's current temperature is suitable for occupation. Similarly, the BMS may provide an input indicating when lights in the room are scheduled to automatically turn on or off, indicating the room's standard hours of operation. The BMS may also provide an input indicating hours for automatically enabling and disabling a security system of a building in which the electrochromic device is located, similarly indicating the building's standard hours of operation.

In some examples, it may be desirable to operate the device differently depending on whether the interior space is in use or not. For further example, the daylight sensor 176 may provide information indicating whether the interior space's current lighting is suitable for occupation. Similarly, the BMS 176 may provide an input indicating when lights in the interior space are scheduled to automatically turn on or off, indicating the interior space's standard hours of operation. The BMS 176 may also provide an input indicating hours for automatically enabling and disabling a security system of the space, similarly indicating the building's standard hours of operation. Thus, these inputs, either individually or in combination, may be useful for determining whether it is desirable that the device 110 be operated at a lowest possible cost (highest energy efficiency), for instance in such cases when the space is determined to be vacant, or whether it is desirable that the device 110 be operated to make the space more suitable for occupation.

The external input sources 160 may also include climate characteristic indicators and sensors 180, including but not limited to a Heating Ventilation and Air-Conditioning (HVAC) system 182, and an outdoor temperature sensor 184. The HVAC system 182 may provide inputs relating to climate control of a room in which the device 110 is located (e.g., heating the room, cooling the room, etc.). The outdoor temperature sensor, similarly, may provide inputs indicating the temperature of an outdoor location.

A user control unit 190 may provide additional inputs indicating preferences regarding operation of the device 110. The user control unit 190 may include a user interface for inputting these preferences. Preferences may include a maximum transmissivity input, a minimum transmissivity setting, and user override inputs, overriding inputs received from the external input sources 160. Preferences may also include, without limitation, an input indicating any one of a desired brightness of the space, solar angles likely to cause glare, and threshold light levels at which glare might be a problem.

Furthermore, each of the specified external input sources 160 may be utilized for purposes in addition to those described above. For example, the HVAC system may provide BMS-type inputs, including a time of day. For further example, the user control unit 190 may provide occupancy sensor type information, including current usage of an interior space.

Using the data 134 and external inputs 160, the device control unit 120 may control each of the panels of the device 110 to achieve a neutral (or, in some examples, an aesthetically pleasing) illumination color spectrum in the interior space. As described above, neutral or aesthetic color may be achieved by darkening some parts of the device 110, either fully or partially, while other parts (generally between about 5% and about 25% of the device) are maintained in a bleached state.

Operations in accordance with controlling the device 110 will now be described. It should be understood that the following operations do not have to be performed in the precise order described below. Rather, various operations can be handled in a different order or simultaneously. It should also be understood that these operations do not have to be performed all at once. For instance, some operations may be performed separately from other operations. Moreover, operations may be added or omitted.

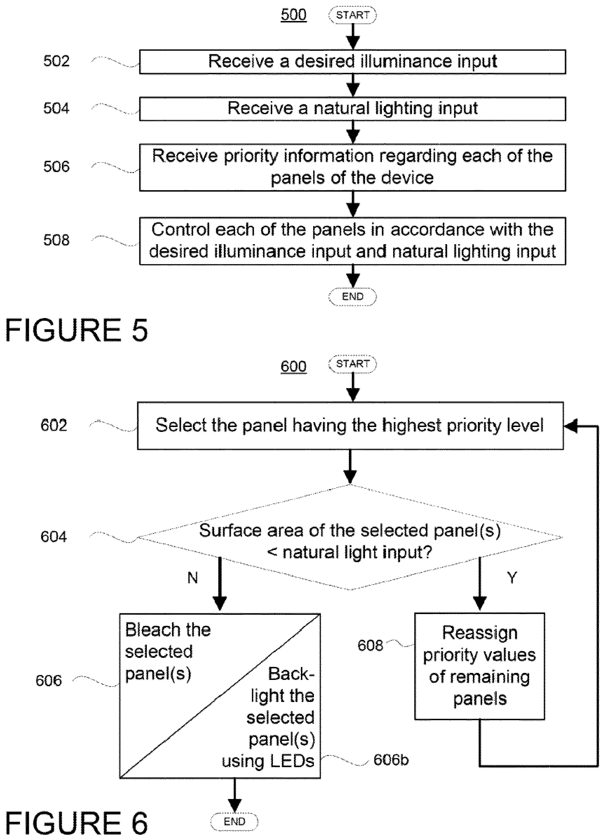

FIG. 5 is a flow diagram depicting operations 500 of the system 100 in conjunction with above described objectives. In block 502, the control unit receives a desired illuminance input, indicating a desired brightness of the space. In one example, this information may be manually inputted by an occupant of the space or other user of the system 100. In another example, this information may be predetermined and stored in the memory 132 of the processor 130. In other examples, the processor 130 may store a default value which may be modified by a manual input.

In block 504, the control unit receives a neutral lighting input indicating the amount of the device (e.g., discrete number of panels, percentage of surface area of the device, etc.) that should be maintained in a bleached state in order to provide adequate color mixing to the interior space. For purposes of clarity, the example of FIG. b (as well as the other example operations below) address only adequate color mixing for providing a substantially color neutral lighting to an interior space. It will be understood that the same operations may be performed more generally to provide an aesthetically pleasing lighting color to the interior space examples are opposed to lighting having an aesthetically pleasing color, which can include both neutral lighting as well as other colors (e.g., grayish or greenish lighting, as opposed to blueish or yellowing lighting). In such examples, the neutral lighting input would provide largely the same information, although the amount of the device that is desired to bleach may vary based on the desired color, the type of device being used, or the shape of the interior space. The neutral lighting input may be a range of percentages or panels, such as a range between about 5% and about 25% of the panels of the device (e.g., 2 or 3 panels if the device includes 18 panels), and may either be preprogrammed into the control unit before installation or may be programmed or updated after installation.

In block 506, the control unit receives priority information regarding each of the panels of the device. As described above, the priority information indicates to the control unit which panels should preferably be bleached to achieve adequate color mixing (e.g., neutral lighting) in the interior space.

In block 508, the control unit controls each of the panels of the device in accordance with the desired illuminance input and the neutral lighting input. Controlling the panels may involve bleaching the panels having the highest priority level while maintaining the total surface area of bleached panels at or within the percentage specified by the neutral lighting input. The remaining panels may be bleached or tinted to achieve lighting in the interior space in accordance with the desired illuminance input.

Routines similar to the operations 500 of FIG. 5 can be performed for selectively bleaching some panels of the device while managing the rest of the panels to achieve another objective other than daylight control. For example, the other panels may be set to control the amount of heat or glare admitted to the interior space. Such routines would substitute the desired illuminance input of block 502 with a desired heating input, a solar glare input, or other input by which control of the remaining panels may be guided in block 508.

FIG. 6 is a flow diagram depicting operations 600 of a subroutine for bleaching the panels having the highest priority level while maintaining the total surface area of bleached panels at or within the percentage provided from the neutral lighting input, which occurs in block 508 of FIG. 5. In block 602, the control unit selects the panel having the highest priority level.

In block 604, the control unit compares the surface area of the bleached panel (which is a known value preprogrammed into the memory) to the neutral lighting input. If the surface area is within or equals the neutral lighting input, operations continue with block 606, and the selected panel is bleached. Operations then end, as the device is set to provide adequate color mixing to the interior space.

If the surface area is less than the neutral lighting input, operations continue with block 608, in which the priority values of the remaining panels are reassigned, such that the panel with the second highest priority is assigned the highest priority. Operations then continue at block 602, and repeat until enough panels are selected that the device provides adequate color mixing to the interior space by bleaching the selected panels. Once enough panels are selected, operations then continue at block 606, and the selected panels are bleached.

If the surface area is greater than the neutral lighting input, indicating that the previously chosen panel is too large to provide the appropriate amount of illuminance to the interior space, then operations continue at block 610, in which the panel most recently selected in block 602 is unselected. Operations then continue with block 608, in which priority vales of the remaining panels (not including the unselected panel) are reassigned.

To further illustrate the subroutine 600 of FIG. 6, the device shown in FIG. 3 may be controlled using subroutine 600. The uppermost panel of the device takes up about 40% of the surface area of the device, whereas each lower panel takes up about 6% of the surface area. In such a scenario, the uppermost panel may be assigned the highest default priority, and thus be selected for bleaching. However, bleaching the uppermost panel may provide too much light to the interior space. For instance, if the 40% surface area of the upper panel exceeds the neutral lighting input, the uppermost panel would be deselected, and one or two of the lower panels would instead be selected, thereby selecting either 6% or 12% of the surface area of the device, respectively, for bleaching.

Aesthetic considerations may also be taken into account when assigning priorities to various panels, default or otherwise. For instance, again with regard to the device of FIG. 3, it may aesthetically desirable to bleach a panel or panels of the device in a symmetrical pattern and/or along an outer border of the device. Therefore, if the uppermost panel is bleached, and the system must select a second panel for bleaching, it may be desirable to bleach a panel adjacent to the uppermost panel. Alternatively, if the uppermost panel is too large to be bleached, and the system must select a different panel for bleaching, it may be most desirable to bleach one or each of the panels on the bottom corner (s) of the device. Thus, the bleaching or tinting of one panel can have aesthetic implications on the desirability of bleaching or tinting other panels. These implications may be taken into account during the process of block 608, in which the priority level of each unselected panel is reassigned.

In some examples, it may not be possible to bleach a sufficient surface area of the device to achieve a neutral lighting in the interior space without bleaching one of the panels for which there is a glare condition. The system would then be left with a choice as to whether the panel should be tinted, whereby the glare is not transmitted into the interior space but neither is a sufficient amount of neutral light to yield an appropriate neutral light illumination color spectrum, or should be bleached, whereby sufficient neutral light is transmitted into the interior space but so is an amount of glare. In such examples, the system may be programmed to give preference either to providing sufficient neutral light, or to shielding all glare, or to strike a balance between the two conflicting conditions. Striking a balance between the conditions may involve programming glare priority levels for each of the panels, such that when the system is confronted with the above described conflict, the system selects the panel having the lowest glare priority (e.g., the panel for which the effects of transmitting glare are of least concern) to be bleached.

Alternatively, the system may resolve the conflict by color rendering the blueish light transmitted through the tinted panels using artificial backlighting and/or sidelighting (hereinafter "backlighting"). The artificial backlighting may be, for instance, one or more light emitting diodes (LEDs) arranged on the façade or window of the device, integrated into the window frame, or within the spacer (s) of the window. The LEDs may be one or more different colors, and may be used to shift or offset the blue hue transmitted through the device. For example, shining a yellow LED near the tinted device may give the overall color spectrum of the light in the interior space a more neutral light-like appearance to an occupant of the interior space. In other examples where the light transmitted through the tinted device gives off a hue other than blue, different color LEDs, or mixtures of colored LEDs, may used to achieve similar color rendering objectives.

In order for the artificial backlighting to work optimally, the light source (hereinafter LED, but could be any other type of artificial light source) should be within physical proximity of the window to avoid shadows having varying colors or hues. Placing the LED in close proximity to a skylight (i.e., where the device is installed in the skylight) could involve suspending the LED below the skylight. In the case of skylight or vertical glass windows, the LED could be laminated between panes of the windows. Alternatively, LEDs could be mounted around the perimeter of the window, either on the glass the framing system, in the spacers of the window, or on the surrounding wall/ceiling.

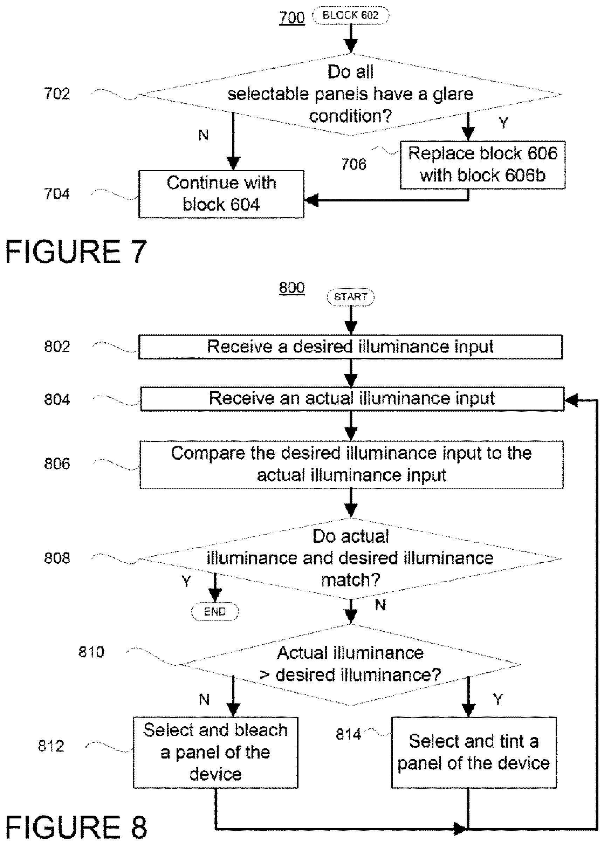

FIG. 7 is a flow diagram depicting operations 700 of a subroutine for operating the LEDs. The subroutine 700 may be part of the operations 600 of FIG. 6. During the operation of block 602, in block 702, the system may determine whether the only panels that may be selected for bleaching are panels that have a glare condition. If the system determines that a panel without a glare condition may be selected, operations continue in block 604, as described above. If the system determines that no panel without a glare condition may be selected, then operations may continue in block 704, where the control unit replaces the operation of block 606 in subroutine 600 with a different operation 606b, in which the selected panel is backlighted using the LEDs instead of being bleached. Operations 600 then continue at block 604, as described above (except that block 606 is replaced with block 606b).

Discriminatory use of LEDs in the above example may be beneficial from an energy efficiency perspective. The energy required to perform color rendering by powering LEDs is generally greater than the energy required to perform color rendering by bleaching a panel of the device. As such, when bleaching a panel of the device is a viable option without sacrificing an occupant's comfort (e.g., due to glare conditions), the system will bleach panels of the device. When bleaching is not a viable option, the system may use the LEDs as a fall back. In some examples, the system may bleach some selected panels while backlighting the remaining selected panels.

In other situations, in which proper use of an interior space demands a precise neutral light illumination color spectrum and is intolerant to glare conditions (e.g., a museum, an artwork gallery, etc.), use of LEDs may be performed in combination with or even entirely in place of bleaching panels of the device. For instance, a panel may be partially bleached and backlit to efficiently provide a precise illumination color spectrum to the interior space.

The above examples provide routines directed mainly to color rendering control and glare control. These routines can also provide for daylighting control of the interior space. For example, setting the neutral lighting input to a value greater than 25% would require more surface area of the device to be bleached, thereby providing some basic daylighting control to the interior space.

Daylighting may also be controlled using an optical sensor capable of measuring the amount of illuminance in the interior space. Control of daylighting would then proceed using the routine 800 provided in FIG. 8. In block 802, the device control unit 120 may receive a desired illuminance input, indicating a desired brightness of the space. This block may be compared to the operations performed in block 502 of FIG. 5.

In block 804, the device control unit 120 may receive an actual illuminance input, indicating a measured illuminance (for example, in lux) of the interior space. In some examples, the actual illuminance input may indicate the measured illuminance for only a portion of the interior space. In such examples, the measured portion of the interior space may be considered representative of the brightness of the entire interior space. In other examples, one or more optical sensors may be stationed within the interior space. Each sensor may collect information regarding the brightness of its respective portion of the interior space. The illuminance measured by each sensor may then be sent to the controller, where the measurements may be combined to yield a measurement of the overall illuminance of the interior space. In one example, the illuminance measured by each of the daylight sensors may be averaged to yield an average illuminance of the interior space. In another example, the illuminance measured by each of the daylight sensors may be assigned a weight (e.g., assigning a greater weight to a measurement taken by a daylight sensor in the center of the interior space than to a measurement taken by a daylight sensor in a corner of the interior space), and then combined to yield a weighted average illuminance of the interior space.

Collecting and utilizing measurements from multiple daylight sensors is especially beneficial in the present disclosure because of the deliberately uneven luminance transmitted by each of the panels. For instance, a daylight sensor positioned in front of one tinted panel may register a dramatically different reading that a daylight sensor positioned in front of a bleached panel. Thus, having multiple sensors in the interior space to compute an average or weighted average luminance in the interior space can provide for more accurate luminance readings.

In yet further examples, the actual illuminance input may be provided by an external optical sensor. The external optical sensor may calculate an amount of luminance on the external facade of the device. The device control unit may then determine how much light is actually passing through the device based on the then-present transmittance state of the device.

In block 806, the device control unit 120 may compare the actual illuminance of the space to the desired illuminance of the space. This may be accomplished, for instance, by calculating a difference between the actual Illuminance input and the desired illuminance input (which may both be measured in lux, resulting in the calculated difference between the inputs also being measured in lux).

In block 808, the device control unit 120 may determine whether the actual illuminance and the desired illuminance sufficiently match. For example, the device control unit 120 may compare the calculated difference between the actual illuminance and the desired illuminance to a threshold value. In one such example, the threshold value may correspond to a margin of error within which the optical sensor can accurately measure the brightness of the interior space. Any brightness measured by the optical sensor within a threshold value of the desired brightness would thus be considered to sufficiently match the desired brightness. In another example, the threshold value may correspond to a tolerable amount of difference between the desired brightness of the interior space and the actual brightness of the interior space (e.g., the desired brightness is within 20% of the actual brightness). In other words, although an occupant of the interior space may desire the interior space to be illuminated to a particular brightness, the occupant may find a space slightly brighter or dimmer to be tolerable. In this example, any brightness measured by the optical sensor within a threshold value of the desired brightness would be tolerable to an occupant of the interior space, and would therefore be considered to sufficiently match the desired brightness.

If it is determined that the actual illuminance and the desired illuminance sufficiently match, routine 800 ends and the interior space is properly lighted. If, however, it is determined that the actual illuminance and the desired illuminance do not sufficiently match, then operations continue in block 810 where the device control unit 120 determines which of the desired illuminance and actual illuminance is greater. If it is determined that the desired illuminance is greater, meaning that not enough light is entering the interior space, then operations may continue at block 812, in which the control unit selects and bleaches a panel of the device. The operation of block 812 may be compared to the subroutine 600 of FIG. 6, as both are routines introduce more light to the interior space by bleaching a panel of the device. One difference between routine 600 and routine 800, of which block 812 is part, is that routine 600 determines illuminance based on the amount of surface area of the device that is bleached, whereas routine 800 determines illuminance based on an input from an optical sensor. As such, block 812 only bleaches a single panel at a time, and then operations revert to block 804, in which the actual illuminance is updated before another comparison between the actual illuminance and desired illuminance is performed. In other examples of the disclosure, multiple panels of the device may be bleached before operations revert to block 804.

If it is determined that the actual illuminance is greater than the desired illuminance, operations continue with block 814, in which a panel of the device is selected and tinted. As with block 812, which selects a panel based on the lighting priorities stored in the data, selecting a panel in block 814 may also be based on the same or similar lighting priorities. For example, the panel having the lowest priority for being bleached may be selected for tinting. Alternatively, the panel having the highest priority for being tinted (e.g., the panel closest to the floor) may be selected for tinting. After the panel is tinted, operations continue at block 804, in which the actual illuminance is updated before another comparison between the actual illuminance and desired illuminance is performed. In other examples of the disclosure, multiple panels of the device may be tinted before operations revert back to block 804.

In addition to color rendering, glare, and daylighting control, the system may also be capable of controlling heating to the interior space. Transmission of solar heat through the device may be controlled by slightly adjusting the transmissivity level of a bleached panel, in accordance with the processes described in copending application Serial No. 13/650,952, which is hereby incorporated herein by reference in its entirety. For example, the control unit may be capable of setting each panel to two different transmissivity levels having similar or nearly identical illuminance color spectra (i.e., both neutral light illuminance color spectra), yet one of the levels may transmit considerably more solar heat than the other level. As such, the bleached panels of the device may be set to the first transmissivity level if it is desired to heat the interior space, or to the second transmissivity level if it is desired to cool the interior space.

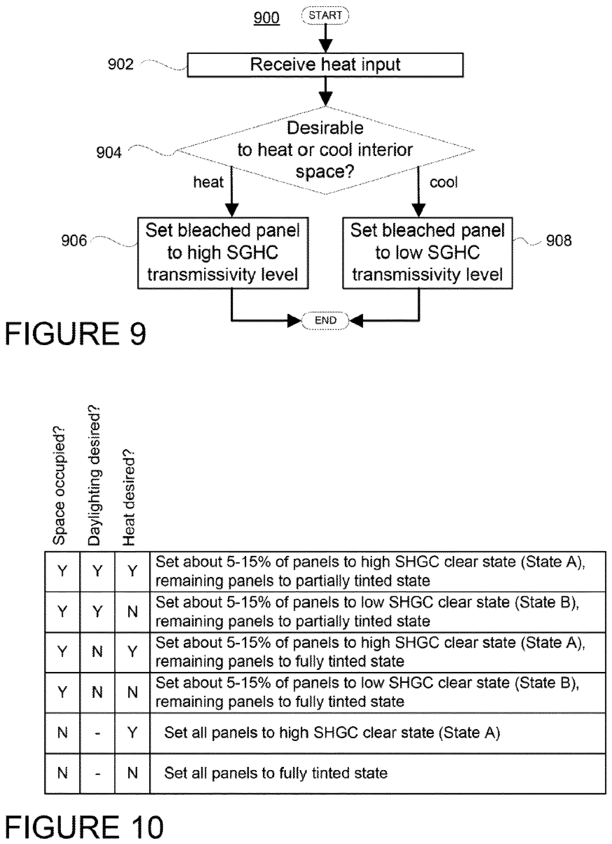

FIG. 9 is a flow diagram depicting a routine 900 for controlling the solar heat transmitted by the clear panels of the device. The routine 900 may be run along with any steps of the above described routines in which a panel is set to a bleached state. The routine may also be run separately from the above described routines in order to control panels that are already bleached. In block 902, the control unit receives a heat input, indicating whether it is desirable to heat or to cool the interior space. In block 904, the control unit determines whether it is desirable to heat or cool the interior space based on the heat input. If the control unit determines that it is desirable to heat the space, then operations continue at block 906, and the control unit sets the bleached panel to a first transmissivity level having a high solar heat gain coefficient (SHGC). If the control unit determines that it is desirable to cool the space, then operations continue at block 908, and the control unit sets the bleached panel to a second transmissivity level having a low solar heat gain coefficient. The "bleached panel" that is controlled in each of blocks 906 and 908 may be the selected panel in either of routines 500 or 800. Alternatively, the "bleached panel" may be every panel of the device that is set to the bleached state at the time that routine 900 is executed.

While the above examples discuss only fully bleaching and fully tinting panels of the device (i.e., to the highest and lowest available transmittance settings, respectively), it will be understood that the same operations can be performed in which panels are partially tinted or partially bleached in order to achieve proper daylighting in the interior space. Partially beaching or tinting the panels using the above described systems and methods can achieve the same or similar daylighting results without significantly deviating from the above disclosure. For example, fully tinting six panels and fully bleaching two panels may have the same daylighting effect as partially tinting seven panels and fully bleaching one panel. However, for purposes of color rendering, it is generally preferable that at least one of the panels be maintained in a fully bleached state or nearly fully bleached state (e.g., high transmittance state) in order to provide light having a neutral illumination color spectrum (or close to neutral illumination color spectrum) appearance to the interior space (at least in those circumstances where such a light spectrum is desirable).

In order to determine the desired control settings of the device, the device control unit may use a management protocol. FIG. 10 depicts one such management protocol in the form of a truth table. In the example of FIG. 10, the management protocol may begin with the control unit determining whether the interior space is occupied. If the space is not occupied (denoted as "N" in FIG. 10), the control unit may either set all the panels of the device to a high SHGC clear state, or to a low transmissivity state, depending on whether it is desired to heat or cool the space, respectively. The low transmissivity state may correspond to any transmission state that is sufficiently opaque to block a substantial amount of solar heat, for example, a transmission state at which only between about 2% and about 25% of visible light is transmitted. In some embodiments, the low transmissivity state may correspond to any transmission state at which less than 25% of visible light is transmitted.

If the space is occupied (denoted as "Y" in FIG. 10), the control unit may further determine whether daylighting the interior space is desired. If daylighting the space is desired ("Y"), the control unit may set most of the panels of the device to a transmission state yielding the desired illuminance in the space. This may be performed by partially tinting each of the panels. About 5% to about 25% of the panels may be maintained at a fully bleached state to provide neutral color lighting to the interior space. Further, if it is desired to heat the space through the bleached panels ("Y"), the control unit may set the bleached panels to a high SHGC clear state. Otherwise, if it is desired to cool the interior space, the control unit may set the bleached panels to a low SHGC clear state.

If daylighting the space is not desired ("N"), the control unit may set most of the panels of the device to a low transmissivity state (e.g., between about 2% and about 25% visible light transmitted). About 5% to about 25% of the panels may be maintained at a fully bleached state to provide neutral color lighting to the interior space. Further, if it is desired to heat the space through the bleached panels ("Y"), the control unit may set the bleached panels to a high SHGC clear state. Otherwise, if it is desired to cool the interior space, the control unit may set the bleached panels to a low SHGC clear state.

A glare input may be used in carrying out the management protocol of FIG. 10 to determine which of the panels to bleach and which to tint. For example, the glare input may be one of several factors taken into account in assigning priority levels to each of the panels, as described in greater detail above.

The above management protocol assumes that an occupant of the interior space will prefer neutral color lighting. Other protocols may receive inputs indicating whether neutral color lighting is or is not desired. Neutral color lighting may be provided to the interior space at the expense of either daylighting the space or heating the space. Therefore, in some cases, a user may be willing to forgo neutral color lighting in lieu of a darker or cooler interior space. A user input may set the occupant's preference as to whether or not the device should color render the transmitted light to produce a neutral illumination color spectrum. If the user selects to forgo neutral color lighting, then in FIG. 10, instead of the system setting most of the panels to a particular state, the system can set all of the panels to the specified state without leaving over about 5%-25% of the panels for color rendering purposes.

While the above examples discuss only bleaching and tinting of individual panels, it will be understood that the same operations can be applied or enforced for zones of panels (in which case each zone is treated like a separate panel) or for subpanels (in which case each subpanel is treated like its own separate panel. The division of zones, panels, and subpanels is only limited by the constraints imposed during the fabrication of the device (e.g., placement of busbars, wiring of circuitry, etc.).

Additionally, while the above examples only address control of a single device of an interior space, it will be understood that the same operations may be implemented to control several devices of the interior space. For example, if an interior space includes multiple electrochromic devices, such as a vertical glass window and a skylight, or such as two vertical glass windows on opposite sides of the interior space, the device control unit may be capable of receiving inputs regarding the status of each device, and further may be capable of independently controlling the transmissivity level of each panel of each individual device. Stated differently, multiple devices may be treated as a single "device" for purposes of this disclosure.

Lastly, while the above examples generally describe color mixing strategies for a standard WO₃ based electrochromic device in a substantially open interior space, it will be understood that the same or similar strategies may employed for other devices and with other spaces, with slight changes and/or variations. For example, in an oddly shaped interior space, or any other space where light mixing is not as good, the color mixing strategy may require a higher neutral lighting input (e.g., 30%, 35% 40%, etc.) to achieve similar color mixing results. Likewise, in an interior space equipped with suspended particle devices ("SPD," which generally appear more blue than standard WO₃ device), the color mixing strategy may require a higher neutral lighting input (e.g., 30%, 35%, 40%, etc.) to achieve a higher neutral lighting input (30%, 35%, 40%, etc.) to achieve similar color mixing results. Also, in some interior spaces, a neutral lighting input of 25% may be too high and provide too much bright light to the space. In such situations, the neutral lighting input may be limited to a smaller range, such as between about 5% and about 15% of the surface area of the device(s).

The following is a list of alphabetically tagged items as a part of the present description.
Item A A method of controlling a plurality of independently controllable sections of one or more electronically tintable devices belonging to a common interior space, the method comprising:
   receiving, at a processor, a neutral lighting input indicating a quantifiable amount of the one or more electronically tintable devices to be set at a high transmittance state;
   receiving, at the processor, a second input associated with one of a desired heating or lighting condition of the interior space;
   selecting, at the processor, a subset of the independently controllable sections in accordance with the neutral lighting input; and
   controlling the one or more electronically tintable devices such that the selected subset of sections are set to a first state for admitting light having a substantially color neutral or aesthetically pleasing spectrum into the interior space, and such that the remaining unselected sections are controlled in accordance with the second input, wherein the overall spectrum of light transmitted through the electronically tintable device has a substantially color neutral or aesthetically pleasing spectrum.
Item B The method of item A, wherein the quantifiable amount is one of a percentage of the total surface area of the electronically tintable devices and a discrete number of sections.
Item C The method of item B, wherein the percentage is between about 5% and about 25% of the total surface area of the electronically tintable devices.
Item D The method of item A, wherein the selecting one or more sections further comprises:
   receiving, at the processor, priority information indicating a high-transmittance priority value for each of the sections; and
   selecting the section or sections having the greatest high-transmittance priority value.
Item E The method of item D, wherein the priority value of a given section is based at least in part on the impact that transmitting light at the first state has on one of the illumination admitted to the interior space, the glare admitted to the interior space, and the overall illumination color spectrum of the light admitted to the interior space.
Item F The method of item E, wherein a section closer to the ceiling of the interior space has a greater priority value than a section closer to the floor of the interior space.
Item G The method of item D, wherein the selecting one or more sections further comprises updating priority values for each of the unselected sections, and wherein selecting the section or sections having the greatest priority value is repeated until the amount of selected sections matches the neutral lighting input.
Item H The method of item D, further comprising comparing the selected amount of the one or more electronically tintable devices to the neutral lighting input; and
   if the selected amount of the one or more electronically tintable devices exceeds the neutral lighting input,
   deselecting one of the selected sections of the one or more electronically tintable devices.
Item I The method of item A, wherein setting a selected section to the first state comprises either:
   setting the selected section to a high transmittance state, or
   illuminating an artificial light source associated with the selected section.
Item J The method of item I, wherein the high transmittance state is such that the illumination color spectrum of light transmitted through a section set to the first state has a substantially color neutral or aesthetically pleasing spectrum.
Item K The method of item I, wherein the high transmittance state has a transmittance with about 10% of the highest transmittance state that the device is capable of achieving.
Item L The method of item I, wherein the artificial light source comprises one or more light emitting diodes.
Item M The method of item I, further comprising: receiving a glare condition input indicating whether
   setting said section to the high transmittance state will result in glare being transmitted to the interior space; and
   if the glare condition input indicates that setting said section to the high transmittance state will result in glare being transmitted to the interior space, illuminating an artificial light source associated with the selected section.
Item N The method of item M, further comprising:
   receiving a glare condition input for each of the sections of the electronically tintable devices; and
   if the amount of sections having a glare condition input indicating the absence of glare is less than the neutral lighting input, illuminating an artificial light source associated with the selected sections; and
   if the amount of sections having a glare condition indicating the absence of glare equals or exceeds the neutral lighting input, setting the selected sections to the high transmittance state.
Item O The method of item A, wherein each independently controllable section is one of a panel of one of the electronically tintable devices, a preset zone of panels of the one or more electronically tintable devices, and a portion of a single panel of one of the electronically tintable devices.
Item P The method of item A, wherein the second input is a desired illuminance input indicating an amount of lighting desired in the interior space, and wherein the method further comprises :
   receiving, at the processor, an actual illuminance input indicating a measured illuminance of the interior space;
   comparing the desired illuminance input with the actual illuminance input;
   if the desired illuminance input and the actual illuminance input do not sufficiently match, determining which of the actual illuminance input and desired illuminance input is greater; and
   controlling the unselected sections, said controlling comprising:
      if the actual illuminance input is greater, setting one or more of the unselected sections to a low transmittance state; and
      if the desired illuminance input is greater, setting one or more of the unselected sections to the high transmittance state.
Item Q The method of item P, wherein the comparing, determining and controlling are repeatedly performed until the actual illuminance input and the desired illuminance input sufficiently match.
Item R A control device for independently varying the transmittance of one or more portions of at least one electronically tintable device, the control device comprising:
   a power source electrically coupled to each of the portions of the at least one electronically tintable device, the power source configured to independently supply power to each of the portions; and
   a processor electrically coupled to the power source, the processor configured to control an amount of current or voltage supplied to each of the portions of the electronically tintable device such that a first portion of the electronically tintable device is set at a first state for blocking at least one of daylight, solar heat, and solar glare, while a second portion of the electronically tintable device is set at a second state for transmitting light having a substantially color neutral or aesthetically pleasing spectrum, wherein the overall spectrum of light transmitted through the electronically tintable device has a substantially color neutral or aesthetically pleasing spectrum.
Item S The control device of item R, wherein the processor is further configured to:
   receive a desired illuminance input indicating an amount of lighting desired in an interior space associated with the at least one electronically tintable device; and
   control an amount of current or voltage supplied the first portion of the electronically tintable device based at least in part on the desired illuminance input.
Item T The control device of item R, wherein the processor is further configured to:
   receive a solar heat input indicating whether it is desired to heat or cool an interior space associated with the at least one electronically tintable device;
   control an amount of current or voltage supplied to the second portion of the electronically tintable devices based at least in part on the solar heat input.
Item U The control device of item R, wherein the processor is further configured to:
   receive a respective priority value for each of the portions of the at least one electronically tintable device, said priority value indicating the impact that transmitting light having a substantially color neutral or aesthetically pleasing spectrum through said respective portion has on the illumination color spectrum of the light transmitted collectively through the at least one electronically tintable device;
   selecting one of the first portion and the second portion of the at least one electronically tintable device based at least in part on the priority value of said selected portion.
Item V A system for controlling an amount and color of light admitted to an interior space, said system comprising:
   one or more electronically tintable devices comprising a plurality of sections, the transmissivity of each section being independently controllable;
   a power source coupled to each of the sections, the power source configured to independently supply power to each of the sections; and
   a processor electrically coupled to the power source, the processor configured to control an amount of current or voltage supplied to each of the sections such that a first section of the electronically tintable devices is operated at a first state for blocking at least one of daylight, solar heat, and solar glare, while a second section of the electronically tintable devices is operated at a second state for providing to the interior space light having a substantially color neutral or aesthetically pleasing spectrum, wherein the overall spectrum of light provided has a substantially color neutral or aesthetically pleasing spectrum.
Item W The system of item V, the system further comprising an artificial light source coupled to the power source, wherein the processor is further configured to control illumination of the artificial light source such that the overall spectrum of light provided to the interior space has a substantially color neutral or aesthetically pleasing spectrum.
Item X The system of item W, wherein the artificial light source is on the façade of the interior space, and wherein at least one of the electronically tintable devices is also on said façade of the interior space.
Item Y The system of item X, wherein said façade of the interior space is one of a building façade and a vehicle frame.
Item Z The system of item W, wherein the artificial light source is one of a laminate between panes of a window on the façade and one or more light emitting diodes mounted around the perimeter of a window on the façade.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the present invention as defined by the claims.

## Claims

1. A method of controlling a plurality of independently controllable sections (262, 263, 264, 265) of one or more electronically tintable devices (110) belonging to a common interior space of a room in a house or an office in a building, the method comprising:
receiving, at a processor (130), a first input, wherein the first input comprises a measure of illuminance indicating an amount of lighting desired in the common interior space;
receiving, at the processor, a second input, wherein the second input comprises a measure of solar heat indicating whether it is desired to warm or cool the common interior space;
determining a quantifiable amount of the one or more electronically tintable devices to be set to a high transmittance state, wherein the quantifiable amount is one of a percentage of the total surface area of the one or more electronically tintable devices and a discrete number of sections, and the percentage is between 5% and 25% of the total surface area of the electronically tintable devices;
selecting, at the processor, a subset of the independently controllable sections in accordance with first input; and
controlling the one or more electronically tintable devices such that the selected subset of sections are set to a first state for admitting visible light having a visible light transmittance of at least 32%, optionally comprising illuminating an artificial light source associated with the selected section, and such that the remaining unselected sections are controlled in accordance with the second input.

2. The method of claim 1, wherein the overall spectrum of light transmitted through the electronically tintable device has a substantially color neutral spectrum, a color neutral spectrum of light defined as a spectrum of light having a color neutral appearance to an observer or occupant of the room.

3. The method of claim 1, wherein the selecting one or more sections further comprises:
receiving, at the processor (130), priority information indicating a high-transmittance priority value for each of the sections; and
selecting the section or sections having the greatest high-transmittance priority value.

4. The method of claim 3, wherein the priority value of a given section is based at least in part on the impact that transmitting light at the first state has on one of the illumination admitted to the interior space, solar glare admitted to the interior space, and the overall illumination color spectrum of the light admitted to the interior space.

5. The method of claim 3, wherein the selecting one or more sections further comprises updating priority values for each of the unselected sections, and wherein selecting the section or sections having the greatest priority value is repeated until the amount of selected sections matches a color rendering input, the color rendering input indicating whether it is desired to admit color neutral light into the space.

6. The method of claim 1, further comprising determining, based on the second input whether it is desired to warm or cool the space; wherein if it is desired to warm the space, setting the electronically tintable device to a first transmission state having a high transitivity and solar heat gain coefficient.

7. The method of claim 1, wherein the second input is received as a solar heat input, and wherein the method further comprises:
- receiving, at the processor, an occupancy input, the occupancy input indicating whether a space associated with the electronically tintable device is vacant or occupied,
- receiving, at the processor, an illuminance input, the illuminance input indicating whether there is an excess of daylight in the space,
- determining, based at least in part on the occupancy input, whether the space is vacant or occupied,
- if the space is vacant:
- determining, based at least in part on the solar heat input, whether it is desired to warm or cool the space;
- if it is desired to warm the space:
- setting the electronically tintable device to the high transmittance state having a high transmissivity and high solar heat gain coefficient,
- if it is desired to cool the space:
- setting the electronically tintable device to a transmission state having a low transmissivity;
- if the space is occupied:
- determining, based at least in part on the illuminance input, whether there is an excess of daylight in the space,
- if there is an excess of daylight in the space:
- determining, based at least in part on the solar heat input, whether it is desired to warm or cool the space
- if it is desired to warm the space:
- setting a first subset of the sections of the electronically tintable device to the high transmittance state having a high transmissivity and high solar heat gain coefficient, and second subset of the sections to a transmission state having a low transmissivity;
- if it is desired to cool the space:
- setting a first subset of the sections of the electronically tintable device to a transmission state having a high transmissivity and low solar heat gain coefficient, and second subset of the sections to a transmission state having a low transmissivity;
- if there is not an excess of daylight in the space:
- determining, based at least in part on the solar heat input, whether it is desired to warm or cool the space
- if it is desired to warm the space:
- setting a first subset of the sections of the electronically tintable device to the high transmittance state having a high transmissivity and high solar heat gain coefficient, and second subset of the sections to a transmission state having a partial transmissivity;
- if it is desired to cool the space:
- setting a first subset of the sections of the electronically tintable device to the high transmittance state having a high transmissivity and low solar heat gain coefficient, and second subset of the sections to a transmission state having a partial transmissivity;
- receiving a color rendering input, the color rendering input indicating whether it is desired to admit color neutral light into the space, and
- if it is determined, based at least in part on the color rendering input, that it is desired to admit color neutral light into the space, maintaining the transmission state of the first subset of sections at a high transmissivity, and
- if it is not desired to admit color neutral light into the space, overriding the transmission state of the first subset of sections such that the transmission state matches that of the second subset of sections.

8. A control device for independently varying the transmittance of one or more portions of at least one electronically tintable device, the control device comprising:
a power source configured to electrically couple each of the portions of the at least one electronically tintable device for a room in a house or an office in a building, the power source configured to independently supply power to each of the portions; and
a processor configured to electrically couple the power source, the processor configured to control an amount of current or voltage supplied to each of the portions of the electronically tintable device such that a first portion of the electronically tintable device is set at a first state for blocking at least one of daylight, solar heat, and solar glare, while a second portion of the electronically tintable device is set at a second state for transmitting light having a substantially color neutral spectrum, wherein the overall spectrum of light transmitted through the electronically tintable device has a substantially color neutral spectrum, a color neutral spectrum of light defined as a spectrum of light having a color neutral appearance to an observer or occupant of the room, and wherein the second portion is one of a percentage of the total surface area of the one or more electronically tintable devices and a discrete number of sections, and the percentage is between 5% and 25% of the total surface area of the electronically tintable devices.

9. The control device of claim 8, wherein the processor is further configured to:
receive a desired illuminance input indicating an amount of lighting desired in an interior space associated with the at least one electronically tintable device; and
control an amount of current or voltage supplied to the first portion of the electronically tintable device based at least in part on the desired illuminance input.

10. The control device of claim 8, wherein the processor is further configured to:
receive a solar heat input indicating whether it is desired to heat or cool an interior space associated with the at least one electronically tintable device;
control an amount of current or voltage supplied to the second portion of the electronically tintable devices based at least in part on the solar heat input.

11. The control device of claim 8, wherein the processor is further configured to:
receive a respective priority value for each of the portions of the at least one electronically tintable device, said priority value indicating the impact that transmitting light having a substantially color neutral spectrum through said respective portion has on the illumination color spectrum of the light transmitted collectively through the at least one electronically tintable device;
selecting one of the first portion and the second portion of the at least one electronically tintable device based at least in part on the priority value of said selected portion.

12. A system for controlling an amount and color of light admitted to an interior space, said system comprising:
one or more electronically tintable devices for a room in a house or an office in a buildingcomprising a plurality of sections, the transmissivity of each section being independently controllable;
a power source coupled to each of the sections, the power source configured to independently supply power to each of the sections; and
a processor electrically coupled to the power source, the processor configured to control an amount of current or voltage supplied to each of the sections such that a first section of the electronically tintable devices is operated at a first state for blocking at least one of daylight, solar heat, and solar glare, while a second section of the electronically tintable devices is operated at a second state for providing to the interior space light, wherein the overall spectrum of light provided has a substantially color neutral spectrum, a color neutral spectrum of light defined as a spectrum of light having a color neutral appearance to an observer or occupant of the room, and wherein the second section is one of a percentage of the total surface area of the one or more electronically tintable devices and a discrete number of sections, and the percentage is between 5% and 25% of the total surface area of the electronically tintable devices.

13. The system of claim 12, the system further comprising an artificial light source coupled to the power source, wherein the processor is further configured to control illumination of the artificial light source such that the overall spectrum of light provided to the interior space has a substantially color neutral or aesthetically pleasing spectrum.

14. The system of claim 13, wherein the artificial light source is configured to be mounted on the façade of the interior space, and wherein at least one of the electronically tintable devices is also configured to be mounted on said façade of the interior space.

15. The system of claim 13, wherein the artificial light source is one of a laminate configured to be mounted between panes of a window on the façade and one or more light emitting diodes configured to be mounted around the perimeter of a window on the façade.
